# EUROPEAN PATENT APPLICATION

(11) **EP 4 075 349 A1**
(43) Date of publication of application: **19.10.2022**
(21) Application number: 20899902.9
(22) Date of filing: 23.10.2020
(51) Int. Cl.: G06Q 10/00

(54) **MAINTENANCE ASSISTANCE SYSTEM**

(30) Priority: 10.12.2019 JP 2019222903
(71) Applicant: Daikin Industries, Ltd., Osaka-shi, Osaka 530-8323 (JP)
(72) Inventor: HANADA, Takuya, Osaka-shi, Osaka 530-8323 (JP); UEDA, Hiroki, Osaka-shi, Osaka 530-8323 (JP)
(74) Representative: Hoffmann Eitle
(86) International application number: PCT/JP2020/039927
(87) International publication number: WO 2021/117357

(57) **Abstract**

A maintenance assistance system (1) outputs a facility maintenance plan for a facility device. The maintenance assistance system (1)includes: an acquisition unit (11) that obtains operation data of the facility device; a memory (12) that stores maintenance cost data corresponding to a content and scheduled time for maintenance of the facility device; a maintenance planning unit (13) that uses the operation data of the facility device to plan a content and scheduled time of maintenance that will become necessary after the operation data is obtained; a maintenance cost calculator (14) that uses the maintenance cost data stored in the memory (12) to calculate a maintenance cost corresponding to the planned content and scheduled time of the maintenance; and a maintenance plan output unit (15) that generates a facility maintenance plan including information in which the content and the scheduled time of the maintenance and the maintenance cost are associated with each other, and outputs the facility maintenance plan.

## Description

### TECHNICAL FIELD

The present disclosure relates to a maintenance assistance system.

### BACKGROUND ART

Patent Literature 1 discloses a technique related to a maintenance assistance system. In the technique of Patent Literature 1, a maintenance plan is generated for a subject device based on calculated maintenance schedule, failure risk, maintenance cost information, labor charges, downtime loss, and the like.

### CITATION LIST

### Patent Literature

Patent Literature 1: Japanese Laid-Open Patent Publication No. 2009-217718 SUMMARY OF INVENTION

### Technical Problem

Even though the cost of maintenance varies depending on the time of year when the maintenance is performed, the prior art does not take into consideration the scheduled time of the maintenance. Thus, it is difficult to generate a facility maintenance plan indicating the maintenance cost that is in accordance with the scheduled maintenance time.

The present disclosure provides a maintenance assistance system that generates a facility maintenance plan including the maintenance cost that is in accordance with the scheduled maintenance time.

### Solution to Problem

A maintenance assistance system that solves the above problem outputs a facility maintenance plan for a facility device. The maintenance assistance system includes an acquisition unit, a memory, a maintenance planning unit, a maintenance cost calculator, and a maintenance plan output unit. The acquisition unit obtains operation data of the facility device. The memory stores maintenance cost data corresponding to a content and scheduled time for maintenance of the facility device. The maintenance planning unit uses the operation data of the facility device to plan a content and scheduled time of maintenance that will become necessary after the operation data is obtained. The maintenance cost calculator uses the maintenance cost data stored in the memory to calculate a maintenance cost corresponding to the planned content and scheduled time of the maintenance. The maintenance plan output unit generates a facility maintenance plan including information in which the content and the scheduled time of the maintenance and the maintenance cost are associate with each other, and outputs the facility maintenance plan. This configuration generates a facility maintenance plan including the maintenance cost corresponding to the scheduled maintenance time.

In the maintenance assistance system, the maintenance plan output unit outputs a facility maintenance plan for each one of predetermined setting conditions. This configuration generates a facility maintenance plan corresponding to each one of various setting conditions.

In the maintenance assistance system, the acquisition unit obtains maintenance allowable period information indicating a period during which the maintenance can be performed. Further, the maintenance planning unit plans the scheduled time of the maintenance based on the maintenance allowable period information. This configuration generates a facility maintenance plan in which the scheduled maintenance time is set in the maintenance allowable period.

The maintenance assistance system further includes a running cost calculator that calculates a running cost of the facility device. The running cost calculator estimates the running cost over a planned maintenance period based on at least one of the obtained operation data, characteristic information of the facility device, and the planned content of the maintenance. Further, the maintenance plan output unit generates the facility maintenance plan including the running cost and outputs the facility maintenance plan. This configuration generates a facility maintenance plan including the running cost.

The maintenance assistance system further includes an opportunity loss calculator that calculates an opportunity loss resulting from suspension of operation of the facility device to perform maintenance. The opportunity loss calculator calculates the opportunity loss corresponding to at least one of the scheduled time of the maintenance and property information related to a property where the facility device is installed. Further, the maintenance plan output unit generates the facility maintenance plan further including the opportunity loss and outputs the facility maintenance plan. This configuration generates a facility maintenance plan including the opportunity loss.

The maintenance assistance system further includes a cycle cost calculator that calculates a cycle cost including a sum of the maintenance cost in a predetermined period, a running cost in the predetermined period, and an opportunity loss in the predetermined period. The maintenance plan output unit generates the facility maintenance plan including the cycle cost and outputs the facility maintenance plan. This configuration generates a facility maintenance plan including the cycle cost in a predetermined period.

The maintenance assistance system further includes an adjustment unit that adjusts at least one of the content and the scheduled time of the maintenance to reduce the cycle cost from an initial calculation value of the cycle cost calculated by the cycle cost calculator. The maintenance plan output unit generates the facility maintenance plan including the content of the maintenance subsequent to adjustment, the scheduled time of the maintenance subsequent to the adjustment, and the cycle cost, and outputs the facility maintenance plan. This configuration generates a facility maintenance plan with an adjusted cycle cost.

In the maintenance assistance system, the adjustment unit adjusts at least one of the content and the scheduled time of the maintenance so that the cycle cost becomes a smallest value in a possible value range of the cycle cost. This configuration generates a facility maintenance plan with the lowest cycle cost.

In the maintenance assistance system, the adjustment unit adjusts at least one of the content and the scheduled time of the maintenance so that the cycle cost becomes less than a specified cost that is specified by an external device. This configuration generates a facility maintenance plan of which the cycle cost is less than a specified cost.

In the maintenance assistance system, the content of the maintenance includes a maintenance subject and a maintenance method of the maintenance subject.

This configuration generates a facility maintenance plan including a maintenance subject and a maintenance method as the maintenance content.

In the maintenance assistance system, the maintenance planning unit determines a deterioration level of a component from the operation data obtained during a high-load operation of the facility device.

With this configuration, the maintenance planning unit may output or use the determination result indicating the deterioration level of a component. For example, the maintenance assistance system uses the deterioration level to update the facility maintenance plan, suggest parts replacement, or generate a maintenance report and the like.

In the maintenance assistance system, the high-load operation corresponds to at least one of an operation of the facility device controlled by the facility device under a predetermined load or higher, and an operation of the facility device performed in accordance with a diagnosis instruction under a predetermined load or higher. With this configuration, the maintenance planning unit determines the deterioration level of a component by performing a high-load operation in accordance with at least one of an operation control and a diagnosis instruction.

In the maintenance assistance system, the facility device includes at least one of an air conditioner, a ventilator, an energy recovery ventilator, and a refrigerator. This configuration generates a facility maintenance plan for an air conditioner, a ventilator, an energy recovery ventilator, and a refrigerator.

### BRIEF DESCRIPTION OF DRAWINGS

Fig. 1 is a schematic diagram of a maintenance assistance system.
Fig. 2 is a block diagram of the maintenance assistance system.
Fig. 3 is a first diagram of a facility maintenance plan.
Fig. 4 is a second diagram of the facility maintenance plan.
Fig. 5 is a third diagram of the facility maintenance plan.
Fig. 6 is a diagram showing a status of a parts inventory.
Fig. 7 is a flowchart illustrating updating of the facility maintenance plan.

### DESCRIPTION OF EMBODIMENT

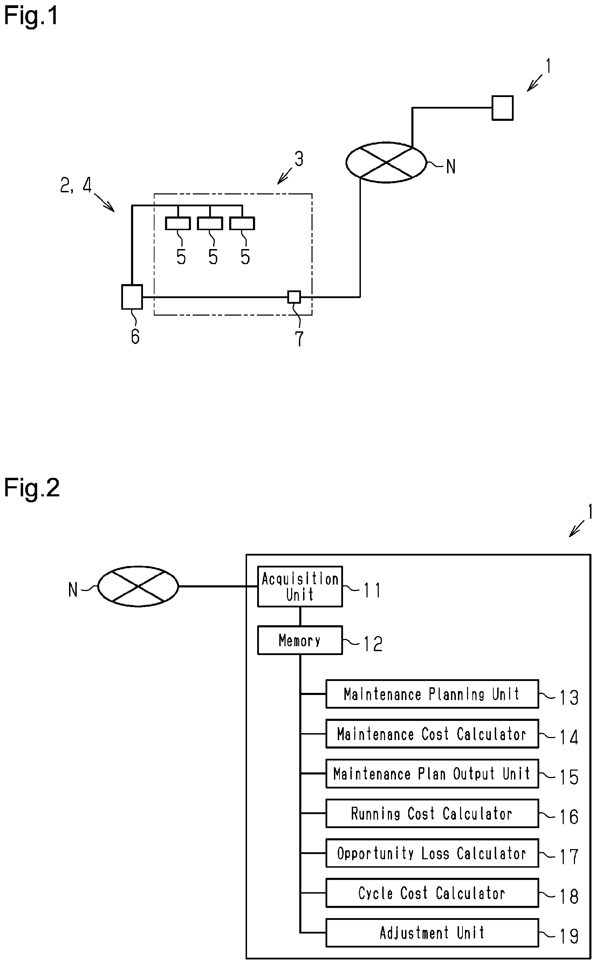

A maintenance assistance system in accordance with an embodiment will now be described with reference to Figs. 1 to 7.

A maintenance assistance system 1 outputs a facility maintenance plan of a facility device 2. Maintenance includes cleaning, parts replacement, parts repair, entire renewal of the facility device 2, and partial renewal of the facility device 2. The entire renewal of the facility device 2 means replacing the entire facility device 2 with a new facility device 2 or a different facility device 2. The partial renewal of the facility device 2 means renewing main components of the facility device 2.

The facility device 2 subject to assistance by the maintenance assistance system 1 is installed in a factory, a business establishment, a school facility, an office building, a shipping vessel, and the like. Examples of the facility device 2, which is assisted by the maintenance assistance system 1, include an air conditioner, a ventilator, an energy recovery ventilator, and a refrigerator. The facility device 2 may be an air conditioning system including at least one of an air conditioner, a ventilator, an energy recovery ventilator, and a refrigerator. The facility device 2 may be a heat pump. The maintenance assistance system 1 provides a user of the maintenance assistance system 1 with information related to the content and scheduled time of maintenance, a maintenance cost, and a cycle cost (also referred to as life-cycle cost).

The maintenance assistance system 1 is configured to establish communication with the facility device 2. In an example, the maintenance assistance system 1 establishes communication with the facility device 2 via a network N. The network N includes at least one of the internet, a local network, a telephone network, and a dedicated line network.

An example of the maintenance assistance system 1 will now be described with reference to Fig. 1. In the present embodiment, the maintenance assistance system 1 assists maintenance of the facility device 2 installed in a facility 3. Fig. 1 is a schematic diagram of the maintenance assistance system 1. The maintenance assistance system 1 establishes communication with the facility device 2 via the network N. In the present embodiment, the facility device 2 is an air conditioner 4. The air conditioner 4 includes indoor units 5, an outdoor unit 6, and a management device 7. The management device 7 controls operation of the indoor units 5 and the outdoor unit 6. The management device 7 collects operation data from the indoor units 5 and the outdoor unit 6. The management device 7 is configured to establish communication with the maintenance assistance system 1. The management device 7 includes a communication device. The management device 7 transmits the operation data to the maintenance assistance system 1 based on a predetermined condition or a request of the maintenance assistance system 1.

Examples of operation data include cumulative operation time of each indoor unit 5, activation/deactivation frequency of a compressor in the outdoor unit 6, cumulative operation time of the compressor in the outdoor unit 6, cumulative operation time of the outdoor unit 6, the number of occurrences when continuous operation time of the indoor unit 5 exceeds a threshold value, the number of occurrences when continuous operation time of the outdoor unit 6 exceeds a threshold value, diagnosis data obtained by a diagnosis operation, various types of anomaly data, and the like.

As shown in Fig. 2, the maintenance assistance system 1 includes an acquisition unit 11, a memory 12, a maintenance planning unit 13, a maintenance cost calculator 14, and a maintenance plan output unit 15. Preferably, the maintenance assistance system 1 further includes a running cost calculator 16. Preferably, the maintenance assistance system 1 further includes an opportunity loss calculator 17. Preferably, the maintenance assistance system 1 further includes a cycle cost calculator 18. Preferably, the maintenance assistance system 1 further includes an adjustment unit 19.

The maintenance planning unit 13, the maintenance cost calculator 14, the maintenance plan output unit 15, the running cost calculator 16, the opportunity loss calculator 17, the cycle cost calculator 18, and the adjustment unit 19 are each formed by a processing circuit such as a central processing unit (CPU) and a micro-processing unit (MPU) and a program that runs the processing circuit. Further, at least two of the maintenance planning unit 13, the maintenance cost calculator 14, the maintenance plan output unit 15, the running cost calculator 16, the opportunity loss calculator 17, the cycle cost calculator 18, and the adjustment unit 19 may be formed by the same processing circuit and a program that runs the processing circuit.

The acquisition unit 11 obtains the operation data of the facility device 2. The acquisition unit 11 obtains planning information used for generating a facility maintenance plan. The planning information includes maintenance cost data and property information related to the property where the facility device 2 is installed. For example, the acquisition unit 11 includes at least one of an input device and a communication device that establishes communication with the facility device 2 via the network N. For example, the input device is a keyboard.

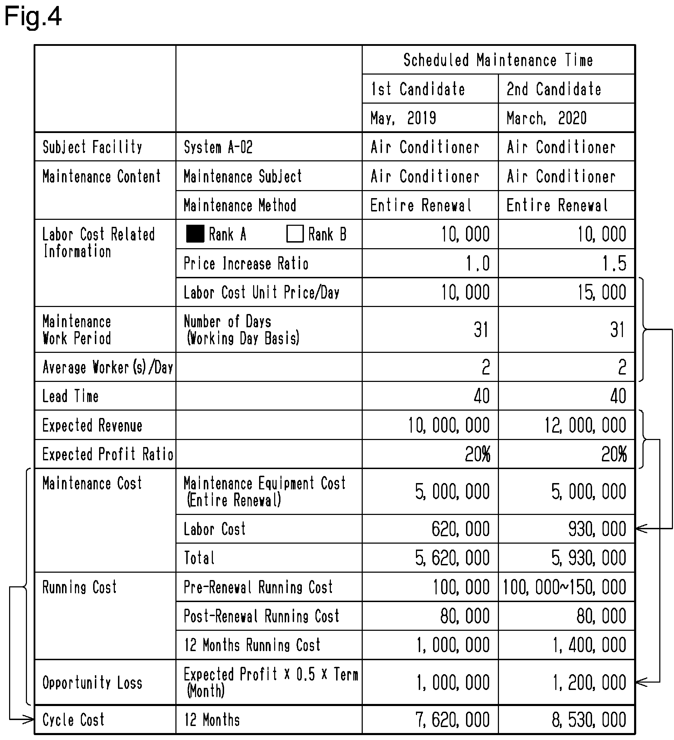

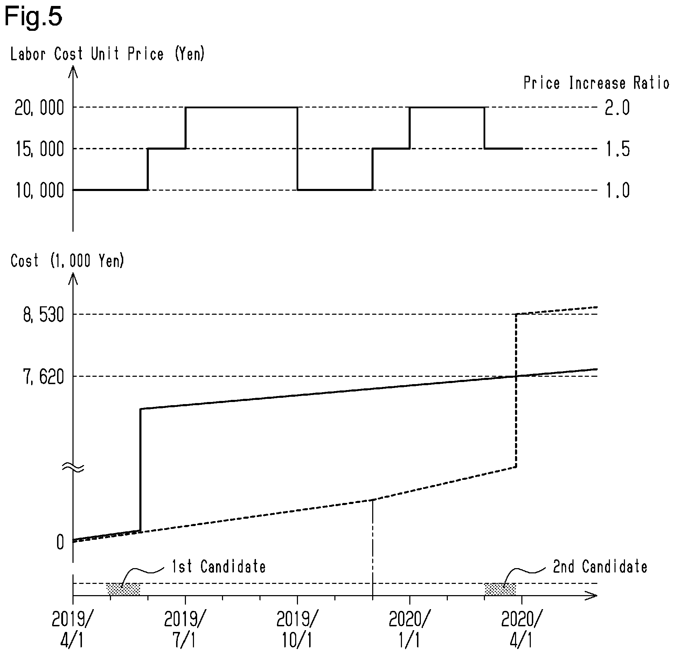

The maintenance cost varies depending on the time of year. The maintenance cost data is used for calculating the maintenance cost. The maintenance cost data includes labor cost data and maintenance equipment cost data. The maintenance equipment data includes at least component cost data and material cost data. The labor cost data includes the unit price of labor cost per day and an increase ratio of the labor cost (refer to Fig. 5). The labor cost unit price for maintenance that requires expert skill differs from the labor cost unit price for maintenance that does not require expert skill. The labor cost unit price for maintenance that requires expert skill is higher than the labor cost unit price for maintenance that does not require expert skill. For example, the technical level related to expert skill of maintenance is classified into rank A and rank B that is lower than rank A. The labor cost unit price in rank A is set higher than rank B. In the example shown in Fig. 4, the labor cost unit price is set to rank A.

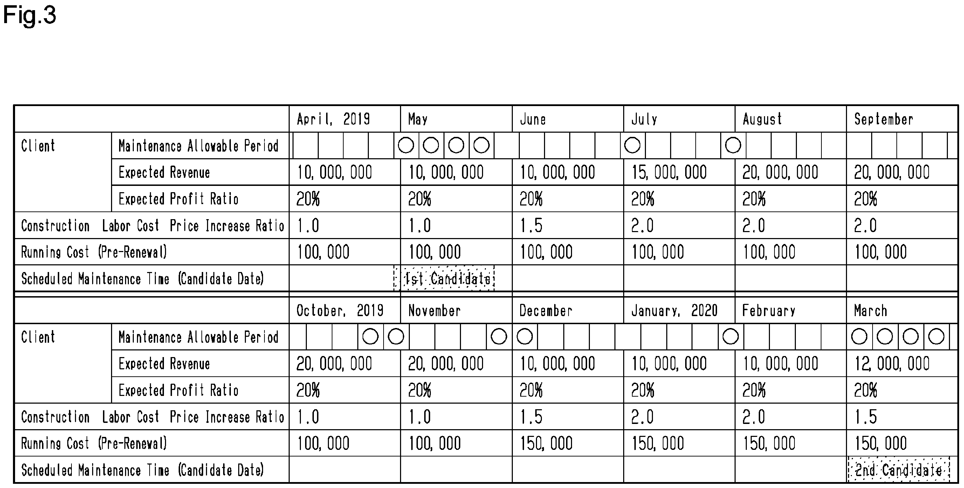

The increase ratio of the labor cost varies depending on the time of year. The labor cost increase ratio is a ratio of the labor cost in a predetermined year and month to the labor cost in a reference year and month. The labor cost increase ratio is estimated in advance for each year and month (refer to Fig. 3). The labor cost increase ratio differs between a slow period and a busy period for maintenance of the facility device 2. For example, the labor cost increase ratio related to the maintenance of the air conditioner 4 varies depending on the season. The operation rate of the air conditioner 4 is higher in summer and winter, and thus failures and repairs occur more frequently. Accordingly, the labor cost increase ratio is higher in summer and winter than spring and fall (refer to Fig. 3). Also, social circumstances such as Olympics Games and prolific skyscraper construction may steeply increase the labor cost. In the maintenance assistance system 1 of the present embodiment, as shown in Fig. 3, the labor cost increase ratio is preset for each month. The labor cost increase ratio may vary widely in accordance with the social conditions and climate changes. Thus, it is preferred that the increase ratio be changeable. In an example, the labor cost data is set by a commercial establishment that operates the maintenance assistance system 1.

As described above, the maintenance equipment data includes the component cost data and the material cost data. The component cost data is related to components used for maintenance. The components are components of the facility device 2, which is the assistance subject. The components are replaced for wear, failure, or performance improvement. The material cost data is related to materials used for maintenance. The materials are items used for maintenance of the facility device 2, which is the assistance subject, and not components of the facility device 2. Examples of such material include a reinforcement member that reinforces the facility device 2 and a protection member that protects the facility device 2 from wind and rain. When renewing the entire facility device 2, the above-described components correspond to the components of the facility device 2, and the above-described materials correspond to the items required to construct the entire facility device 2.

The component cost data includes a component unit price and miscellaneous expenses. The material cost data includes a material unit price and miscellaneous expenses. The component unit price and the material unit price vary depending on the time of year. For example, when the demand for the facility device 2, which is the assistance subject, increases and the production of the facility device 2 enters a busy period, shortages of the components and materials occur and cause the unit prices to rise. The miscellaneous expenses of the components and materials vary depending on the time of year. For example, when the components and materials are low in inventory and these items need to be sent from a factory located far from where the assisted facility device 2 is installed, the transportation cost will vary depending on how much time there is until when the maintenance will be performed. Specifically, if the time until the maintenance is limited, air transportation of the components and materials will be necessary and increase the miscellaneous expenses.

The property information includes business information of a commercial establishment that operates in the property where the facility device 2 is installed. The business information is used for calculating commercial loss when suspending operation of the facility device 2. For example, the business information includes expected revenue in each month and expected profit ratio in each month (refer to Fig. 3). The business information can be set by the commercial establishment that uses the facility device 2.

Further, the acquisition unit 11 obtains maintenance allowable period information indicating a period during which maintenance can be performed. The maintenance allowable period information indicates a scheduled maintenance time that is convenient for the commercial establishment that uses the facility device 2 (refer to Fig. 3). For example, if the facility device 2 in a hotel is the assistance subject of the maintenance assistance system 1, it is preferable for the commercial establishment that the facility device 2 be renewed during the off-season when business is slow. The maintenance allowable period information is used to set an appropriate scheduled maintenance time. The maintenance allowable period information can be set by the commercial establishment that uses the facility device 2.

The memory 12 stores the information obtained by the acquisition unit 11. The memory 12 stores the maintenance cost data. Preferably, the memory 12 stores the operation data of the facility device 2. The memory 12 stores the business information. Further, the memory 12 stores the maintenance allowable period information. Furthermore, the memory 12 stores a facility maintenance plan generated by the maintenance plan output unit 15. The memory 12 includes at least one of a semiconductor memory, an optical disc, a magnetic disc, and a magnetic tape.

The maintenance planning unit 13 uses the operation data of the facility device 2 to plan a content and scheduled time of maintenance that will become necessary after the operation data is obtained. The scheduled maintenance time refers to when maintenance is to be performed. The content of maintenance includes a maintenance subject and a maintenance method of the maintenance subject. The maintenance subject refers to the entire facility device 2, devices in the facility device 2, and components in the facility device 2. The maintenance method includes cleaning, replacement of parts, repair of parts, entire renewal of the facility device 2, and partial renewal of the facility device 2.

If, for example, the air conditioner 4 is the assistance subject of the maintenance assistance system 1, the maintenance planning unit 13 sets the content of the maintenance based on the activation/deactivation frequency of the compressor. When the activation/deactivation frequency of the compressor is greater than a preset value, the maintenance planning unit 13 sets the maintenance content to replacement of the compressor. In another example, the maintenance planning unit 13 sets the content of maintenance based on the cumulative operation time of the indoor unit 5 and the cumulative operation time of the outdoor unit 6. When the cumulative operation time of the indoor unit 5 and the cumulative operation time of the outdoor unit 6 are greater than a preset value, the maintenance planning unit 13 sets the content of maintenance to entire renewal of the facility device 2.

The maintenance planning unit 13 may determine a deterioration level of a component from the operation data obtained during a high-load operation of the facility device 2. The maintenance planning unit 13 sets the maintenance content based on the deterioration level of the component of the facility device 2. For example, the maintenance planning unit 13 has a determination table for the deterioration level associated with the activation/deactivation frequency of the compressor. The maintenance planning unit 13 obtains the activation/deactivation frequency from the facility device 2 as the operation data and refers to the determination table to determine the deterioration level based on the activation/deactivation frequency. Then, the maintenance planning unit 13 uses the deterioration level determination result to predict failures and determine whether maintenance is necessary.

The air conditioner 4 performs two types of high-load operations. The first operation (hereafter, normal/high-load operation) of the air conditioner 4 is controlled by the air conditioner 4 and performed under a predetermined load or higher. The second operation (hereafter, diagnosis operation) of the air conditioner 4 is performed in accordance with diagnosis instructions under a predetermined load or higher. The operation data of at least one of the normal/high-load operation and the diagnosis operation is used by the maintenance planning unit 13 to determine the deterioration level. The operation data obtained in a high-load operation to determine whether maintenance is necessary is more accurate than that obtained in a low-load operation.

In the air conditioner 4, the normal/high-load operation corresponds to a cooling operation and a heating operation. The operation data output from the air conditioner 4 during a cooling operation or a heating operation is used by the maintenance planning unit 13 as the operation data of a high-load operation. An air blowing operation does not correspond to a high-load operation. The high-load operation is not performed in spring or fall. Thus, in these periods, the acquisition unit 11 is unlikely to obtain effective operation data for determining the deterioration level. Accordingly, a diagnosis operation is performed in spring and fall. The diagnosis operation may be substantially the same as a heating operation or a cooling operation. The diagnosis operation may be performed in a period other than spring and fall. The diagnosis operation may be performed when the maintenance assistance system 1 requires operation data. For example, the diagnosis operation may be performed at nighttime regardless of the season. The maintenance planning unit 13 uses the operation data of the diagnosis operation as operation data of a high-load operation. The maintenance planning unit 13 may issue a diagnosis instruction for performing the diagnosis operation. The diagnosis operation may be performed in accordance with a preset schedule in the facility device 2. Preferably, the facility device 2 is configured to perform the diagnosis operation and output the operation data to the maintenance assistance system 1 via the network N.

Examples of the diagnosis operation performed in the air conditioner 4 include diagnosis of an electric expansion valve, diagnosis of a thermistor, and anomaly determination performed during a high-load operation. Preferably, a diagnosis program for performing the diagnoses is preset in a controller of the air conditioner 4. The maintenance planning unit 13 may include a diagnosis program for performing the diagnoses. In a diagnosis of the electric expansion valve, the air conditioner 4 obtains the difference in the refrigerant temperature between before and after an open/close instruction of the electric expansion valve and detects an open/close actuation anomaly from the difference in the refrigerant temperature. In a diagnosis of the thermistor, the air conditioner 4 simultaneously obtains an output value of the thermistor and at least one of the refrigerant temperature and the operation state of the air conditioner 4, and compares the values to detect an actuation anomaly of the thermistor. The air conditioner stores the diagnosis data obtained by the diagnosis operation as operation data and outputs the operation data in response to a request of the maintenance assistance system 1.

The maintenance planning unit 13 plans scheduled time of maintenance based on the maintenance allowable period information. Preferably, the maintenance planning unit 13 determines the scheduled time for performing maintenance based on the maintenance content and the maintenance allowable period information. The maintenance planning unit 13 sets recommended maintenance time based on the maintenance content. When the maintenance content is the entire renewal of the facility device 2, the recommended maintenance time is set taking into consideration the number of days required for the renewal. Further, the maintenance planning unit 13 sets one or more maintenance schedules based on the recommended maintenance time and the maintenance allowable period information (refer to candidate dates in Fig. 3).

The maintenance planning unit 13 may refer to information from a component inventory management system to set scheduled maintenance time. The component inventory management system manages the inventory of the components of the facility device 2. The maintenance planning unit 13 specifies components required for the maintenance from the maintenance content and refers to the component inventory management system to check the inventory. Then, the maintenance planning unit 13 sets the scheduled maintenance time based on the availability of the components.

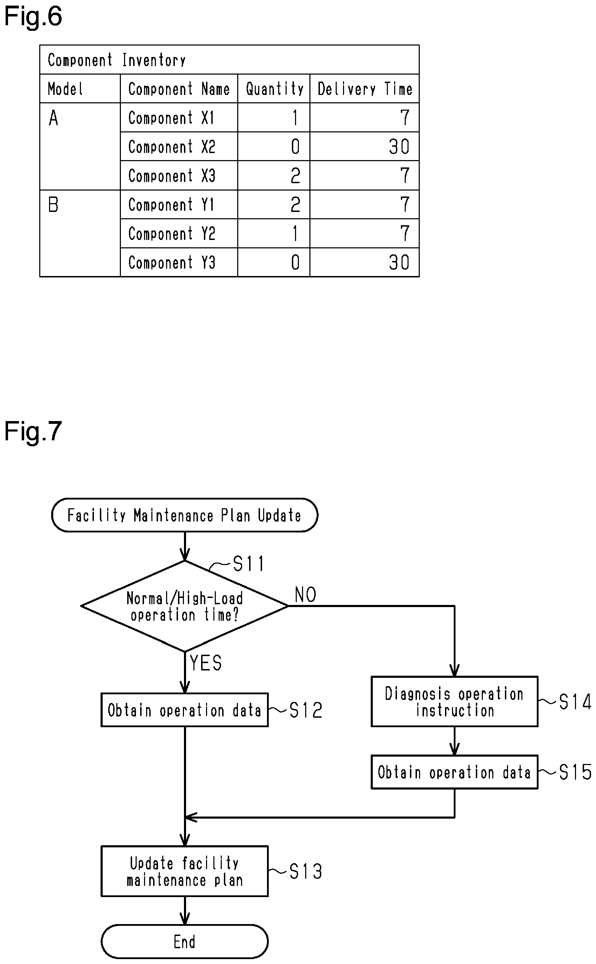

Fig. 6 is an example of a table managed by the component inventory management system. The component inventory management system manages the inventory of the parts in the facility device 2 of various models. Also, the component inventory management system manages the time of delivery for procurement of the components.

The maintenance cost calculator 14 uses the maintenance cost data stored in the memory 12 to calculate the maintenance cost corresponding to the planned maintenance content and the scheduled maintenance time. Preferably, the maintenance cost calculator 14 calculates the maintenance cost including the labor cost and the maintenance equipment cost. The maintenance equipment cost is calculated based on the maintenance content. For example, when renewing the entire air conditioner 4, the maintenance equipment cost corresponds to the cost of the entire air conditioner 4 and the installation cost (construction cost for installing facility that is separate from labor cost). The maintenance equipment cost may be calculated based on the component cost data and the material cost data. The labor cost is obtained by multiplying the number of days in the maintenance work period, the labor cost unit price, and the average number of workers per unit time (refer to Fig. 4).

The running cost calculator 16 calculates the running cost of the facility device 2. Specifically, the running cost calculator 16 estimates the running cost of the facility device 2 over the planned maintenance period based on at least one of the operation data obtained by the acquisition unit 11, characteristic information of the facility device 2, and the content of the planned maintenance.

The characteristic information of the facility device 2 corresponds to information related to the operating cost of the facility device 2. Examples of the characteristic information of the facility device 2 include electric power consumption of the facility device 2, operation time of the facility device 2 per predetermined period, frequency of use of the facility device 2, and the cost per unit of electric power. The running cost calculator 16 may calculate operation time per predetermined period from the operation data. The running cost calculator 16 may calculate frequency of use of the facility device 2 from the operation data.

The running cost calculator 16 refers to information related to the running cost in the maintenance content. The running cost calculator 16 specifies a consumable from the maintenance content and obtains the unit price of the consumable from the memory 12.

The running cost refers to a cost incurred when operating the facility device 2. The running cost includes the electric power cost for operating the facility device 2 and the cost of the consumable. The running cost increases as the facility device 2 is used longer and deteriorates.

In an example in which the air conditioner 4 is the assistance subject of the maintenance assistance system 1, the running cost calculator 16 calculates the running cost using operation time, frequency of use, and electric power unit cost of the air conditioner 4. Also, the running cost calculator 16 may have a running cost table that indicates the running cost in association with the cumulative operation time of the indoor unit 5 and the cumulative operation time of the outdoor unit 6. The running cost calculator 16 may refer to the running cost table and set the running cost for each month in a predetermined period based on the cumulative operation time of the indoor unit 5 and the cumulative operation time of the outdoor unit 6.

The running cost calculator 16 estimates the running cost for each month in the planned maintenance period (Fig. 3). When renewing the facility device 2, the running cost differs between the months before and after the renewal of the facility device 2. The running cost becomes lower after the renewal than before the renewal.

The running cost calculator 16 may calculate the running cost over the planned maintenance period. For example, the planned maintenance period is twelve months. When the facility device 2 is scheduled to be renewed during the planned maintenance period, the running cost calculator 16 calculates the running cost over the planned maintenance period (total running cost) based on the running costs before and after the renewal (refer to Fig. 4). The running cost over the planned maintenance period (total running cost) is defined as the sum of the running cost of each month in the planned maintenance period.

The opportunity loss calculator 17 calculates an opportunity loss resulting from suspension of operation of the facility device 2 to perform maintenance. In an example, the opportunity loss calculator 17 calculates the opportunity loss corresponding to at least one of the scheduled maintenance time and the property information related to the property where the facility device 2 is installed. In an example, the opportunity loss calculator 17 obtains the opportunity loss (refer to Fig. 4) by multiplying the expected profit ratio per month, the expected revenue per month, the maintenance work period, and a profit decrease ratio ("0.5" in Fig. 4).

The cycle cost calculator 18 calculates the cycle cost including the sum of the maintenance cost in a predetermined period, the running cost in the predetermined period, and the opportunity loss in the predetermined period. The cycle cost may also be referred to as "life-cycle cost". For example, the predetermined period is defined as one year from when the facility maintenance plan is generated. In the present embodiment, the predetermined period is the same as the planned maintenance period.

The cycle cost calculator 18 obtains the maintenance cost from the maintenance cost calculator 14. The cycle cost calculator 18 obtains the running cost from the running cost calculator 16. The cycle cost calculator 18 obtains the opportunity loss from the opportunity loss calculator 17. The cycle cost calculator 18 calculates the sum of the maintenance cost, the running cost, and the opportunity loss, and then outputs the sum as the cycle cost (refer to Fig. 4).

The adjustment unit 19 adjusts at least one of the content and the scheduled time of the maintenance to reduce the cycle cost from an initial calculation value of the cycle cost calculated by the cycle cost calculator 18. Preferably, when the adjustment unit 19 adjusts at least one of the content and the scheduled time of the maintenance, the maintenance plan output unit 15 outputs the facility maintenance plan prior to adjustment and the facility maintenance plan subsequent to adjustment.

In an example, when the maintenance content is fixed, the adjustment unit 19 changes the scheduled maintenance time to when the labor cost is lower than the initial calculation so as to reduce the cycle cost. When the scheduled maintenance time is fixed, the adjustment unit 19 deletes non-urgent matters from the maintenance content and generates a new maintenance content so as to reduce the cycle cost. The adjustment unit 19 may adjust at least one of the content and the scheduled maintenance time so that the cycle cost becomes a smallest value in a possible value range of the cycle cost. The adjustment unit 19 may adjust at least one of the content and the scheduled maintenance time so that the cycle cost becomes less than a specified cost specified by an external device. The specified cost is a value specified by the commercial establishment operating in the property where the facility device 2 is installed. The acquisition unit 11 obtains the specified cost through the input device.

The maintenance plan output unit 15 generates a facility maintenance plan including information (hereafter, associated information) in which the content and the scheduled time of maintenance and the maintenance cost are associate with each other, and outputs the facility maintenance plan. For example, as shown in Fig. 4, the maintenance plan output unit 15 generates a table in which the candidates for the scheduled maintenance time are associated with the maintenance content and the maintenance cost over the planned maintenance period. The table corresponds to the associated information. Further, as shown in Fig. 5, the maintenance plan output unit 15 generates a chart in which the candidates for the scheduled maintenance time are associated with the costs over the planned maintenance period. The chart corresponds to the associated information.

The maintenance plan output unit 15 generates a facility maintenance plan including the running cost and outputs the facility maintenance plan. Further, the maintenance plan output unit 15 may generate a facility maintenance plan including the opportunity loss and output the facility maintenance plan. Furthermore, the maintenance plan output unit 15 may generate a facility maintenance plan including the cycle cost and output the facility maintenance plan.

The maintenance plan output unit 15 may output a facility maintenance plan for each one of predetermined setting conditions. Examples of the setting condition include the maintenance allowable period, the labor cost increase ratio in each month, the expected revenue in each month, and the expected profit ratio in each month. The maintenance assistance system 1 is configured to input multiple values to at least one of the setting conditions, and the maintenance plan output unit 15 generates a facility maintenance plan for each value and outputs the facility maintenance plan. This allows a user of the maintenance assistance system 1 to recognize how the facility maintenance plan changes with different setting conditions. In an example, multiple periods are specified as the maintenance allowable periods. The maintenance plan output unit 15 generates and outputs a facility maintenance plan for each maintenance allowable period. In the example of the facility maintenance plan shown in Figs. 3 to 5, first and second candidates are set as the maintenance allowable periods, and a facility maintenance plan is generated for each of the first and second candidates.

When the cycle cost is adjusted by the adjustment unit 19, the maintenance plan output unit 15 generates a facility maintenance plan including the maintenance content subsequent to adjustment, the scheduled maintenance time subsequent to the adjustment, and the cycle cost and outputs the facility maintenance plan.

An example of the facility maintenance plan will now be described with reference to Figs. 3 to 5. As shown in Figs. 3 to 5, the facility maintenance plan is formed as a chart or table. Figs. 3 to 5 show a facility maintenance plan for a period in which the facility device 2 will be renewed. In this example, the planned maintenance period is one year. The maintenance work period for renewing the facility device 2 is one month.

Fig. 3 is a table indicating the maintenance allowable periods, the expected revenue, and the expected profit ratio of the commercial establishment, the labor cost increase ratio, the pre-renewal running cost of the facility device 2, and the candidate dates for the scheduled maintenance time in the planned maintenance period. The maintenance allowable periods, the expected revenue, and the expected profit ratio of the commercial establishment and the labor cost increase ratio are input to the maintenance assistance system 1.

In the example shown in Fig. 3, a plurality of candidate dates is set for the scheduled maintenance time in the planned maintenance period. Each candidate date is set within the maintenance allowable period of the commercial establishment. In this example, the first and second candidates are set for the scheduled maintenance time in the planned maintenance period. The first candidate is in May. The second candidate is in March of the following year.

Fig. 4 shows the labor cost related information, the maintenance work period, the average number of workers involved in the maintenance per day in the maintenance work period, the lead time for the renewal of the facility device 2, the expected revenue, the expected profit ratio, the maintenance cost, the running cost, the opportunity loss, and the cycle cost for each candidate.

In this example, the technical level of the maintenance is set to rank A. The labor cost unit price that does not reflect the increase ratio is the same for the first and second candidates, that is, the unit price in rank A. The first candidate is in a slow period and thus the labor cost increase ratio is 1. The second candidate is in a busy period and thus the labor cost increase ratio is 1.5. The labor cost included in the maintenance cost is obtained by multiplying the labor cost unit price reflecting the increase ratio, the maintenance work period, and the number of average workers. The labor cost of the second candidate is higher than the first candidate. The maintenance cost is obtained by adding the labor cost and the maintenance equipment cost. In this example, the maintenance equipment cost corresponds to the cost for renewing the facility device 2 and is an estimated price that does not vary depending on the time of year. Thus, the maintenance equipment cost is substantially equal to the cost for installing a new facility device 2.

In the first candidate, the running cost before the renewal of the facility device 2 will be incurred from April to May. The running cost after the renewal of the facility device 2 will be incurred from June to March of the following year. In the second candidate, the running cost before the renewal of the facility device 2 will be incurred from April to March of the following year. The running cost of the first candidate over the planned maintenance period (total running cost) is lower than the second candidate.

In this example, the profit decrease ratio is set to 0.5 (refer to Fig. 4) assuming that the business operation will be approximately one-half the normal operation during the construction period of the renewal of the facility device 2. The opportunity loss is calculated as the product of the expected profit and the profit decrease ratio. The expected profit in the first candidate is less than the second candidate. Accordingly, the opportunity loss in the first candidate is less than the second candidate.

As described above, the cycle cost is the sum of the maintenance cost, the running cost, and the opportunity loss.

The cycle cost of the first candidate is lower than the second candidate.

Fig. 5 is a chart that compares the cost of maintenance and the cost of operating the facility device 2 for the first candidate and the second candidate during the planned maintenance period. With the first candidate, the running cost will be incurred from April to May and the cost of renewing the facility device 2 and the opportunity loss will be incurred at the end of May. Subsequently, the post-renewal running cost will be incurred. With the second candidate, the running cost will be incurred from April to March of the following year and the cost of renewing the facility device 2 and the opportunity loss will be incurred at the end of March. In this manner, the costs incurred during the planned maintenance period greatly differ depending on the time of year when the facility device 2 is renewed (scheduled maintenance time). In this example, such difference is caused by the differences in the labor cost, the opportunity loss, and the monthly running cost.

The updating of the facility maintenance plan will now be described with reference to Fig. 7. The maintenance assistance system 1 reviews and updates the facility maintenance plan several times during the planned maintenance period. In an example, the maintenance assistance system 1 updates the facility maintenance plan four times in the planned maintenance period. The update time is set in advance.

In step S11, the maintenance assistance system 1 determines whether the facility device 2 is performing the normal/high-load operation at the time the facility maintenance plan is updated. In an example in which the facility device 2 is an air conditioner, the maintenance assistance system 1 determines whether the normal/high-load operation is being performed during the update time based on the operation data indicating the operation time of the facility device 2 per day or the electric power consumption of the facility device 2 relative to the air conditioning capacity. In another example, the period in which the normal/high-load operation is performed may be set in advance. For example, the periods in which the normal/high-load operation is performed is set from July to September and from December to March.

When the facility device 2 is performing the normal/high-load operation during the update time, the maintenance assistance system 1 obtains the operation data from the facility device 2 in step S12. In step S13, the maintenance assistance system 1 updates the facility maintenance plan in accordance with the operation data.

When the facility device 2 is not performing the normal/high-load operation during the update time, the maintenance assistance system 1 instructs the facility device 2 to perform the diagnosis operation in step S14. Alternatively, a worker may input a diagnosis instruction signal to the facility device 2 in response to a notification from the maintenance assistance system 1. In step S15, the maintenance assistance system 1 obtains the operation data from the facility device 2 that underwent the diagnosis operation. Subsequently, in step S13, the maintenance assistance system 1 updates the facility maintenance plan.

The operation of the maintenance assistance system 1 will now be described. The maintenance assistance system 1 calculates the labor cost related to maintenance as a value corresponding to the content and the scheduled time of the maintenance. The maintenance assistance system 1 outputs a facility maintenance plan that includes the scheduled maintenance time and the maintenance cost including the labor cost. The maintenance assistance system 1 provides the user of the maintenance assistance system 1 with information on the maintenance cost including the labor cost, which varies depending on the time of year. Further, the maintenance assistance system 1 provides the user of the maintenance assistance system 1 with information on the maintenance cost including the maintenance equipment cost, which varies depending on the time of year. The user using the maintenance assistance system 1 can select the scheduled maintenance time to reduce the maintenance cost.

The present embodiment has the following advantages.
(1) The maintenance assistance system 1 includes at least the maintenance cost calculator 14 and the maintenance plan output unit 15. The maintenance cost calculator 14 uses the maintenance cost data to calculate a maintenance cost corresponding to the content and scheduled time for maintenance. The maintenance plan output unit 15 generates a facility maintenance plan including information in which the content and the scheduled time of maintenance and the maintenance cost are associating with each other. The maintenance assistance system 1 generates a facility maintenance plan including the maintenance cost corresponding to the scheduled maintenance time.
(2) The maintenance plan output unit 15 outputs the facility maintenance plan for each one of the predetermined setting conditions. This configuration generates a facility maintenance plan corresponding to each one of various setting conditions.
(3) The maintenance planning unit 13 plans the scheduled time of the maintenance based on the maintenance allowable period information. With this configuration, the maintenance assistance system 1 generates a facility maintenance plan in which the scheduled maintenance time is set in the maintenance allowable period.
(4) The running cost calculator 16 estimates the running cost over the planned maintenance period based on at least one of the operation data, the characteristic information of the facility device 2, and the maintenance content. The maintenance plan output unit 15 generates a facility maintenance plan including the running cost. With this configuration, the maintenance assistance system 1 generates a facility maintenance plan including the running cost.
(5) The opportunity loss calculator 17 calculates the opportunity loss corresponding to at least one of the scheduled maintenance time and the property information related to the property where the facility device 2 is installed. The maintenance plan output unit 15 generates a facility maintenance plan further including the opportunity loss and outputs the facility maintenance plan. With this configuration, the maintenance assistance system 1 generates a facility maintenance plan including the opportunity loss.
(6) The cycle cost calculator 18 calculates the cycle cost including the sum of the maintenance cost in a predetermined period, the running cost in the predetermined period, and the opportunity loss in the predetermined period. The maintenance plan output unit 15 generates a facility maintenance plan including the cycle cost and outputs the facility maintenance plan. With this configuration, the maintenance assistance system 1 generates a facility maintenance plan including the cycle cost in a predetermined period.
(7) The adjustment unit 19 adjusts at least one of the content and the scheduled time of the maintenance to reduce the cycle cost from the initial calculation value of the cycle cost. The maintenance plan output unit 15 generates a facility maintenance plan including the maintenance content subsequent to adjustment, the scheduled maintenance time subsequent to the adjustment, and the cycle cost, and outputs the facility maintenance plan. With this configuration, the maintenance assistance system 1 generates a facility maintenance plan with an adjusted cycle cost.
(8) The adjustment unit 19 adjusts at least one of the content and the scheduled time of maintenance so that the cycle cost becomes the smallest value in a possible value range of the cycle cost. This configuration generates a facility maintenance plan with the lowest cycle cost.
(9) The adjustment unit 19 adjusts at least one of the content and the scheduled time of maintenance so that the cycle cost becomes less than a specified cost that is specified by an external device. This configuration generates a facility maintenance plan of which the cycle cost is less than a specified cost.
(10) The maintenance content includes a maintenance subject and a maintenance method of the maintenance subject. This configuration generates a facility maintenance plan including a maintenance subject and a maintenance method as the maintenance content.
(11) The maintenance planning unit 13 determines the deterioration level of a component from the operation data obtained during a high-load operation of the facility device 2. With this configuration, the maintenance planning unit 13 may output or use the determination result indicating the deterioration level of a component. For example, the maintenance assistance system 1 uses the deterioration level to update the facility maintenance plan, suggest parts replacement, or generate a maintenance report and the like.
(12) The operation data obtained during a high-load operation for determining the deterioration level corresponds to at least one of an operation of the facility device 2 controlled by the facility device 2 under a predetermined load or higher 2 and an operation of the facility device 2 performed in accordance with a diagnosis instruction under a predetermined load or higher. With this configuration, the maintenance planning unit 13 determines the deterioration level of a component by performing a high-load operation in accordance with at least one of an operation control and a diagnosis instruction.
(13) In the maintenance assistance system 1, the facility device 2 includes at least one of the air conditioner 4, a ventilator, an energy recovery ventilator, and a refrigerator. This configuration generates a facility maintenance plan for the air conditioner 4, a ventilator, an energy recovery ventilator, and a refrigerator.

### Modified Examples

In addition to the above-described embodiment, the maintenance assistance system 1 of the present disclosure is applicable to, for example, modified examples of the above embodiment that are described below and combinations of at least two of the modified examples that do not contradict each other.

In addition to a facility maintenance plan corresponding to scheduled maintenance time, the maintenance assistance system 1 may generate a facility maintenance plan having a fixed price in which the monthly maintenance cost is fixed. Preferably, the maintenance assistance system 1 displays the facility maintenance plan corresponding to the scheduled maintenance time and the facility maintenance plan having the fixed price so that the two plans can be viewed simultaneously and/or compared. In the facility maintenance plan having the fixed price, the content and the schedule time of maintenance are preset in accordance with the characteristic information of the facility device 2. In the facility maintenance plan having the fixed price, the commercial establishment operating in the property where the facility device 2 is installed has limited privileges. The commercial establishment managing the maintenance assistance system 1 and its personnel perform maintenance based on the facility maintenance plan having the fixed price. When renewing the facility device 2 according to the facility maintenance plan having the fixed price, it is preferred that the maintenance assistance system 1 notifies the commercial establishment operating in the property where the facility device 2 is installed of the scheduled maintenance time for the renewal of the facility device 2.

In addition to the monthly labor cost unit price, the labor cost data may include the labor cost unit price at certain time period of a day, the labor cost unit price at daytime of a holiday, and the labor cost unit price at nighttime of a holiday, and the like. This allows for accurate calculation of the labor cost.

In the example shown in Figs. 3 and 4, the maintenance equipment cost is a fixed value that does not vary depending on the time of year. However, the maintenance equipment cost may be varied depending on the time of year. In this case, the maintenance equipment cost is calculated from the component cost data and the material cost data.

It should be understood that the above-described maintenance assistance system 1 may be embodied in many other specific forms within the scope and equivalence of the maintenance assistance system 1 described in the appended claims.

## Claims

1. A maintenance assistance system (1) that outputs a facility maintenance plan for a facility device, the maintenance assistance system comprising:
an acquisition unit (11) that obtains operation data of the facility device;
a memory (12) that stores maintenance cost data corresponding to a content and scheduled time for maintenance of the facility device;
a maintenance planning unit (13) that uses the operation data of the facility device to plan a content and scheduled time of maintenance that will become necessary after the operation data is obtained;
a maintenance cost calculator (14) that uses the maintenance cost data stored in the memory (12) to calculate a maintenance cost corresponding to the planned content and scheduled time of the maintenance; and
a maintenance plan output unit (15) that generates a facility maintenance plan including information in which the content and the scheduled time of the maintenance and the maintenance cost are associated with each other, and outputs the facility maintenance plan.

2. The maintenance assistance system according to claim 1, being **characterized in that** the maintenance plan output unit (15) outputs a facility maintenance plan for each one of predetermined setting conditions.

3. The maintenance assistance system according to claim 1 or 2, being **characterized in that**
the acquisition unit (11) obtains maintenance allowable period information indicating a period during which the maintenance can be performed, and
the maintenance planning unit (13) plans the scheduled time of the maintenance based on the maintenance allowable period information.

4. The maintenance assistance system according to any one of claims 1 to 3, further being **characterized by**:
a running cost calculator that calculates a running cost of the facility device, wherein:
the running cost calculator estimates the running cost over a planned maintenance period based on at least one of the obtained operation data, characteristic information of the facility device, and the planned content of the maintenance; and
the maintenance plan output unit (15) generates the facility maintenance plan including the running cost and outputs the facility maintenance plan.

5. The maintenance assistance system according to any one of claims 1 to 4, further being **characterized by**:
an opportunity loss calculator (17) that calculates an opportunity loss resulting from suspension of operation of the facility device to perform maintenance, wherein
the opportunity loss calculator (17) calculates the opportunity loss corresponding to at least one of the scheduled time of the maintenance and property information related to a property where the facility device is installed, and
the maintenance plan output unit generates the facility maintenance plan further including the opportunity loss and outputs the facility maintenance plan.

6. The maintenance assistance system according to any one of claims 1 to 5, further being **characterized by**:
a cycle cost calculator (18) that calculates a cycle cost including a sum of the maintenance cost in a predetermined period, a running cost in the predetermined period, and an opportunity loss in the predetermined period;
wherein the maintenance plan output unit (15) generates the facility maintenance plan including the cycle cost and outputs the facility maintenance plan.

7. The maintenance assistance system according to claim 6, further being **characterized by**:
an adjustment unit (19) that adjusts at least one of the content and the scheduled time of the maintenance to reduce the cycle cost from an initial calculation value of the cycle cost calculated by the cycle cost calculator(18),
wherein the maintenance plan output unit (15) generates the facility maintenance plan including the content of the maintenance subsequent to adjustment, the scheduled time of the maintenance subsequent to the adjustment, and the cycle cost, and outputs the facility maintenance plan.

8. The maintenance assistance system according to claim 7, being **characterized in that** the adjustment unit (19) adjusts at least one of the content and the scheduled time of the maintenance so that the cycle cost becomes a smallest value in a possible value range of the cycle cost.

9. The maintenance assistance system according to claim 7, being **characterized in that** the adjustment unit (19) adjusts at least one of the content and the scheduled time of the maintenance so that the cycle cost becomes less than a specified cost that is specified by an external device.

10. The maintenance assistance system according to any one of claims 1 to 9, being **characterized in that** the content of the maintenance includes a maintenance subject and a maintenance method of the maintenance subject.

11. The maintenance assistance system according to any one of claims 1 to 10, being **characterized in that** the maintenance planning unit (13) determines a deterioration level of a component from the operation data obtained during a high-load operation of the facility device.

12. The maintenance assistance system according to claim 11, being **characterized in that** the high-load operation corresponds to at least one of an operation of the facility device controlled by the facility device under a predetermined load or higher, and an operation of the facility device performed in accordance with a diagnosis instruction under a predetermined load or higher.

13. The maintenance assistance system according to any one of claims 1 to 12, being **characterized in that** the facility device includes at least one of an air conditioner, a ventilator, an energy recovery ventilator, and a refrigerator.
